# EUROPÄISCHE PATENTSCHRIFT

(11) **EP 4 101 740 B1**
(45) Veröffentlichungstag und Bekanntmachung des Hinweises auf die Patenterteilung: **29.10.2025**
(21) Anmeldenummer: 22182417.0
(22) Anmeldetag: 17.05.2019
(51) Int. Cl.: B62D 25/00, B62D 29/00

(54) **DÄMMELEMENT UND VERFAHREN ZUR DÄMMUNG EINES STRUKTURELEMENTS**
INSULATING ELEMENT AND METHOD FOR INSULATING A STRUCTURAL ELEMENT
ÉLÉMENT D'ISOLATION ET PROCÉDÉ D'ISOLATION D'UN ÉLÉMENT DE STRUCTURE

(30) Priorität: 23.05.2018 EP 18173907
(43) Veröffentlichungstag der Anmeldung: 14.12.2022
(62) Teilanmeldung aus: 19724206.8
(73) Patentinhaber: Sika Technology AG, 6340 Baar (CH)
(72) Erfinder: Brichet, Nicolas, 8055 Zürich (CH); Etterli, Heinz, 5627 Besenbüren (CH)
(74) Vertreter: Sika Patent Attorneys

(56) Entgegenhaltungen:
- EP-A1- 2 151 369
- EP-B1- 1 328 415
- US-A- 6 131 897
- US-B1- 6 253 524

## Beschreibung

Die Erfindung betrifft ein Dämmelement zur Dämmung eines Strukturelementes in einem Kraftfahrzeug. Sie betrifft des Weiteren ein Verfahren zur Dämmung eines Strukturelementes in einem Kraftfahrzeug.

Vielfach weisen Bauelemente, wie beispielsweise Karosserien und/oder Rahmen von Transport- und Fortbewegungsmitteln, insbesondere von Fahrzeugen zu Wasser oder zu Land oder von Luftfahrzeugen, Strukturen mit Hohlräumen auf, um leichtgewichtige Konstruktionen zu ermöglichen. Diese Hohlräume verursachen jedoch verschiedenste Probleme. Je nach Art des Hohlraumes muss dieser zum Verhindern des Eindringens von Feuchtigkeit und Verschmutzungen, die zur Korrosion der Bauelemente führen können, abgedichtet werden. Oft ist es auch wünschenswert, die Hohlräume und somit das Bauelement wesentlich zu verstärken, jedoch das geringe Gewicht beizubehalten. Oft ist es auch notwendig, die Hohlräume und somit die Bauelemente zu stabilisieren, um Geräusche, die sonst den Hohlraum entlang oder durch diesen hindurch übertragen werden würden, zu reduzieren. Viele dieser Hohlräume weisen eine unregelmässige Form oder ein enges Ausmass auf, wodurch es erschwert wird, sie richtig abzudichten, zu verstärken und zu dämpfen.

Insbesondere im Automobilbau, aber auch im Flugzeug- und Bootsbau, werden deshalb Abdichtungselemente (Englisch: baffle) verwendet, um Hohlräume abzudichten und/ oder akustisch abzuschotten, oder Verstärkungselemente (Englisch: reinforcer) verwendet, um Hohlräume zu verstärken.

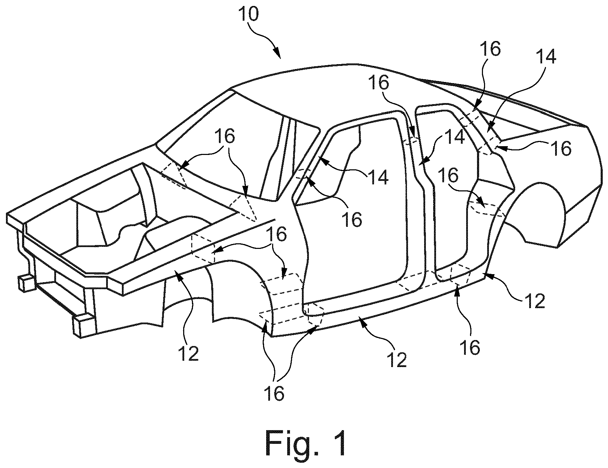

In Fig. 1 ist eine Karosserie eines Automobils schematisch dargestellt. Die Karosserie 10 weist dabei verschiedene Strukturen mit Hohlräumen, wie beispielsweise Säulen 14 und Träger bzw. Verstrebungen 12 auf. Solche Strukturelemente 12, 14 mit Hohlräumen werden üblicherweise mit Abdichtungs- und/oder Verstärkungselementen 16 abgedichtet bzw. verstärkt.

Aus US 6 253 524 B1 ist ein Strukturelement bekannt, welches durch ein Verstärkungselement verstärkt ist. Das Verstärkungselement hat dabei einen Träger, auf welchem Strukturverstärkungsmaterial in dafür vorgesehenen Schalen angeordnet ist.

Aus US 6 131 897 A ist eine Verstärkungselement bekannt, bei welchem thermisch expandierbare Harzstreifen mechanisch an einer Vorrichtung befestigt sind. Die mechanische Verankerung dieser Harzstreifen erlaubt es, auf einen Klebstoff oder eine Hitzeanwendung zu verzichten, um die Streifen an der Vorrichtung zu befestigen. Dieses Dokument offenbart ein Dämmelement.

Nachteilig an den bisher bekannten Abdichtungs- und/oder Verstärkungselementen ist es, dass für jede Karosserieform und für jeden Hohlraum einer Karosserie ein individuell angepasstes Element hergestellt werden muss. Dies führt zu hohen Entwicklungs- und Herstellungskosten und ist insbesondere bei kleineren Fahrzeugserien nachteilhaft.

Es ist daher eine Aufgabe der vorliegenden Erfindung, ein verbessertes Dämmelement zur Dämmung eines Strukturelementes in einem Kraftfahrzeug zur Verfügung zu stellen, welches die Nachteile des Standes der Technik vermeidet. Das Dämmelement soll insbesondere wirtschaftliche Vorteile bei Kleinserien mit sich bringen und insgesamt einen Entwicklungs- und Herstellungsaufwand der Dämmelemente reduzieren.

Diese Aufgabe wird gelöst durch ein Dämmelement zur Dämmung eines Strukturelementes in einem Fahrzeug, das Dämmelement umfassend: ein Grundelement mit einem ersten Kopplungselement, wobei das Grundelement expandierbares Material umfasst; ein Zusatzelement mit einem zweiten Kopplungselement, wobei das Zusatzelement expandierbares Material umfasst; und ein Fixierungselement zur Fixierung des Dämmelementes im Strukturelement; wobei das Grundelement und das Zusatzelement durch die Kopplungselemente miteinander verbunden sind.

Diese Lösung hat den Vorteil, dass dadurch ein Grundelement für verschiedene Anwendungsfälle eingesetzt werden kann. Indem das Grundelement mit verschiedenen Zusatzelementen kombiniert wird, können dadurch in der Art eines Bausatzes Dämmelemente für verschiedenartige Hohlräume in Strukturelementen zur Verfügung gestellt werden. Da die Zusatzelemente sehr unterschiedlich ausgestaltet werden können, können dabei auch sehr unterschiedlich geformte Hohlräume in Strukturelementen mit dem gleichen Grundelement und einem jeweils dazu kombinierten unterschiedlichen Zusatzelement gedämmt werden.

Ein Kerngedanke der vorliegenden Erfindung besteht darin, dass zunächst ein Grundelement zur Verfügung gestellt wird. Das Grundelement ist dabei beispielsweise derart ausgestaltet, dass es zur Dämmung eines kleinen regulär geformten Hohlraumes von Strukturelementen eingesetzt werden kann. Diesem Grundelement wird nun eines oder auch mehrere Zusatzelemente hinzugefügt, welche je nach Bedarf für einen konkreten (unter Umständen irregulär geformten) Hohlraum eines Strukturelementes verwendet werden können. Somit kann das Grundelement in hohen Stückzahlen hergestellt werden, und die Zusatzelemente können beispielsweise mit günstigen Herstellungsverfahren (insbesondere durch Extrusion oder Koextrusion) hergestellt werden. Somit kann auch für kleine Stückzahlen oder für Testversuche und Ähnliches ein Grundelement, welches aufgrund hoher Stückzahl günstig hergestellt werden kann, mit einem günstig herstellbaren Zusatzelement kombiniert werden. Dadurch können tiefere Gesamtkosten erreicht werden, als wenn für jeden Hohlraum ein individuell angefertigtes Dämmelement hergestellt werden müsste.

Die Bezeichnung "Dämmelement" bzw. "Dämmung" bzw. "gedämmt" umfasst im Zusammenhang mit dieser Erfindung Elemente bzw. Strukturen bzw. Verfahrensschritte zur Abschottung und/oder Verschliessung und/oder Verstärkung und/oder Dämmung eines Strukturelementes. Diese verschiedenen Eigenschaften eines solchen Dämmelementes können dabei einzeln oder aber in Kombination miteinander auftreten.

In einer beispielhaften Ausführungsform sind das erste Kopplungselement und das zweite Kopplungselement derart ausgebildet, dass die Kopplungselemente in einem miteinander verbundenen Zustand durch einen Formschluss miteinander verbunden sind.

In einer beispielhaften Ausführungsform sind das erste Kopplungselement und das zweite Kopplungselement als Clip und als Öffnung ausgebildet, so dass die Kopplungselemente ineinander einrastbar sind.

In einer alternativen, nicht beanspruchten Ausführungsform sind das erste Kopplungselement und das zweite Kopplungselement derart ausgebildet, dass die Kopplungselemente in einem miteinander verbundenen Zustand durch einen Kraftschluss miteinander verbunden sind.

In einer beispielhaften, nicht beanspruchten Ausführungsform sind das erste Kopplungselement und das zweite Kopplungselement als magnetische Elemente ausgebildet, so dass die Kopplungselemente über magnetische Kräfte miteinander verbindbar sind.

In einer beispielhaften Ausführungsform haben das Grundelement und das Zusatzelement jeweils zwei oder mehrere Kopplungselemente, so dass Grundelement und Zusatzelement an zwei oder mehreren Orten miteinander verbunden sind.

Das Vorsehen von zwei oder auch mehreren Kopplungselementen hat den Vorteil, dass dadurch das Zusatzelement sich nicht verdrehen kann in Bezug auf das Grundelement. Insbesondere das Vorsehen von zwei Kopplungselementen ist vorteilhaft, weil dadurch einerseits eine einfache Handhabung gewährleistet ist, und andererseits eine sichere und verdrehsichere Verbindung zwischen Grundelement und Zusatzelement erzielt werden kann.

In einer beispielhaften Ausführungsform ist das Grundelement ohne Träger ausgebildet.

In einer alternativen Ausführungsform hat das Grundelement einen Träger, auf welchem das expandierbare Material angeordnet ist.

Das Vorsehen eines solchen Trägers hat den Vorteil, dass dadurch ein Expansionsverhalten des expandierbaren Materials besser kontrolliert werden kann. Der Träger stabilisiert das expandierbare Material während einer Expansion und je nach Ausgestaltung des Trägers kann eine Expansion in eine gewünschte Richtung gelenkt werden.

In einer beispielhaften Ausführungsform hat der Träger eine erste Platte, wobei das expandierbare Material auf einer Seite dieser ersten Platte oder auf beiden Seiten der ersten Platte angeordnet ist.

In einer beispielhaften Weiterbildung hat der Träger eine zweite Platte, wobei das expandierbare Material zumindest zwischen der ersten Platte und der zweiten Platte angeordnet ist.

Das Vorsehen solcher Platten als Bestandteile des Trägers bietet den Vorteil, dass dadurch eine stabile Basis für die Expansion des expandierbaren Materials zur Verfügung gestellt wird.

In einer beispielhaften Ausführungsform hat die erste Platte und/oder die zweite Platte Öffnungen, welche derart angeordnet sind, dass das expandierbare Material bei einer Expansion durch diese Öffnungen hindurch expandieren kann.

In einer beispielhaften Ausführungsform ist das Grundelement durch ein Spritzgussverfahren hergestellt.

In einer beispielhaften Weiterbildung ist das Grundelement durch ein Zweikomponentenspritzgussverfahren hergestellt.

Da das Grundelement in hohen Stückzahlen produziert werden kann, ist ein Spritzgussverfahren zur Herstellung des Grundelements besonders geeignet, da bei Spritzgussverfahren die Kosten bei hohen Stückzahlen stark sinken. Demnach kann das Grundelement auf diese Art und Weise kosteneffizient hergestellt werden.

In einer beispielhaften Ausführungsform hat das Grundelement im Wesentlichen eine Form eines Quaders.

In einer beispielhaften alternativen Ausführungsform hat das Grundelement im Wesentlichen die Form eines Zylinders.

In einer weiteren beispielhaften alternativen Ausführungsform hat das Grundelement im Wesentlichen die Form eines Kegels.

In einer beispielhaften Weiterbildung hat das Grundelement im Wesentlichen die Form eines Rotationskegels.

In einer beispielhaften Ausführungsform hat das Zusatzelement eine Länge, welche zumindest doppelt so gross ist wie eine Länge des Grundelementes.

In einer beispielhaften Weiterbildung ist die Länge des Zusatzelementes zumindest dreimal so gross wie die Länge des Grundelementes.

Das Vorsehen eines im Vergleich zum Grundelement langen Zusatzelementes hat den Vorteil, dass durch das Zusatzelement entfernte Ecken oder schwer zugängliche Nebenräume der auszuschäumenden Hohlräume erreicht werden können.

In einer beispielhaften Ausführungsform ist das Zusatzelement durch ein Extrusionsverfahren hergestellt.

In einer beispielhaften Weiterbildung ist das Zusatzelement durch ein Koextrusionsverfahren hergestellt.

Das Verwenden eines Extrusionsverfahrens für das Zusatzelement hat den Vorteil, dass durch solche Extrusionsverfahren auch bei kleineren Stückzahlen niedrige Kosten möglich sind, weil für das Extrusionsverfahren keine teuren Werkzeuge angefertigt werden müssen.

In einer beispielhaften Ausführungsform hat das Zusatzelement einen Träger.

Das Vorsehen eines Trägers im Zusatzelement hat den Vorteil, dass dadurch wiederum das expandierbare Material bei einer Expansion durch den Träger gestützt werden kann. Dadurch kann das expandierbare Material gezielter expandiert werden, sodass einerseits eine bessere Ausschäumung des Hohlraumes erreicht werden kann und andererseits mit minimalem Materialeinsatz des expandierbaren Materials eine maximale Wirkung erreicht werden kann.

In einer beispielhaften Weiterbildung ist der Träger vollständig im expandierbaren Material des Zusatzelementes integriert.

In einer alternativen Weiterbildung sind der Träger und das expandierbare Material schichtartig ausgebildet.

In einer beispielhaften Ausführungsform hat das Zusatzelement einen länglichen Querschnitt.

In einer beispielhaften Ausführungsform hat das Zusatzelement einen im Wesentlichen geraden Querschnitt.

In einer alternativen beispielhaften Ausführungsform hat das Zusatzelement einen gekrümmten oder gebogenen oder wellenförmigen oder gezackten Querschnitt.

In einer beispielhaften Ausführungsform ist das Fixierungselement als separates Element ausgebildet.

In einer alternativen Ausführungsform ist das Fixierungselement einstückig mit dem Träger des Grundelementes ausgebildet.

In einer weiteren alternativen Ausführungsform ist das Fixierungselement einstückig mit dem Träger des Zusatzelementes ausgebildet.

Das Fixierungselement ist zusammen mit dem ersten Kopplungselement oder dem zweiten Kopplungselement als doppelter Clip ausgebildet.

Eine solche Kombination von erstem Kopplungselement bzw. zweitem Kopplungselement und dem Fixierungselement hat den Vorteil, dass dadurch Materialkosten eingespart werden können, indem mit einem kombinierten Teil sowohl die Funktion der Fixierung des Dämmelementes im Strukturelement als auch die Verbindung des Grundelementes mit dem Zusatzelement erreicht wird.

Das Fixierungselement ist als Clip ausgebildet.

In einer alternativen, nicht beanspruchten beispielhaften Ausführungsform ist das Fixierungselement als Schweisslasche ausgebildet.

In einer weiteren alternativen, nicht beanspruchten Ausführungsform ist das Fixierungselement als magnetisches Material ausgebildet.

In einer weiteren alternativen beispielhaften, nicht beanspruchten Ausführungsform ist das Fixierungselement als Klebstoff ausgebildet.

In einer beispielhaften Ausführungsform ist das Grundelement mit einem ersten Zusatzelement und mit einem zweiten Zusatzelement verbunden.

In einer beispielhaften Weiterbildung sind das erste Zusatzelement und das zweite Zusatzelement auf derselben Seite des Grundelementes angeordnet.

In einer alternativen Weiterbildung sind das erste Zusatzelement und das zweite Zusatzelement auf unterschiedlichen Seiten des Grundelementes, insbesondere auf gegenüberliegenden Seiten des Grundelementes, angeordnet.

Als expandierbares Material kann grundsätzlich jedes beliebige Material eingesetzt werden, das zur Schäumung gebracht werden kann. Dieses Material kann dabei Verstärkungseigenschaften aufweisen oder auch nicht. Typischerweise wird das schäumbare Material thermisch, durch Feuchtigkeit oder durch elektromagnetische Strahlung geschäumt.

Ein solches expandierbares Material weist typischerweise ein chemisches oder ein physikalisches Treibmittel auf. Chemische Treibmittel sind organische oder anorganische Verbindungen, welche sich unter Einfluss von Temperatur, Feuchtigkeit, oder elektromagnetischer Strahlung zersetzen, wobei mindestens eines der Zersetzungsprodukte ein Gas ist. Als physikalische Treibmittel können beispielsweise Verbindungen eingesetzt werden, welche bei Erhöhung der Temperatur in den gasförmigen Aggregatszustand übergehen. Dadurch sind sowohl chemische als auch physikalische Treibmittel in der Lage, Schaumstrukturen in Polymeren zu erzeugen.

Bevorzugt wird das expandierbare Material thermisch geschäumt wobei chemische Treibmittel eingesetzt werden. Als chemische Treibmittel eignen sich beispielsweise Azodicarbonamide, Sulfohydrazide, Hydrogencarbonate oder Carbonate.

Geeignete Treibmittel sind beispielsweise auch kommerziell erhältlich unter dem Handelsnamen Expancel^{®} von der Firma Akzo Nobel, Niederlande, oder unter dem Handelsnamen Celogen^{®} von der Firma Chemtura Corp., USA.

Die für die Schäumung erforderliche Wärme kann durch externe oder durch interne Wärmequellen, wie einer exothermen chemischen Reaktion, eingebracht werden. Das schäumbare Material ist vorzugsweise bei einer Temperatur von ≤ 160 °C, insbesondere von 80 °C bis 150 °C, bevorzugt von 90 °C bis 140 °C, schäumbar.

Als expandierbare Materialien geeignet sind beispielsweise einkomponentige bei Raumtemperatur nicht fliessende Epoxidharzsysteme, welche insbesondere eine erhöhte Schlagzähigkeit aufweisen und Thixotropiermittel wie Aerosile oder Nanoclays enthalten. Beispielsweise weisen derartige Epoxidharzsysteme 20 bis 50 Gew.-% eines Epoxid-Füssigharzes, 0 bis 30 Gew.-% eines Epoxid-Festharzes, 5 bis 30 Gew.-% Zähigkeitsmodifikatoren, 1 bis 5 Gew.-% physikalische oder chemische Triebmittel, 10 bis 40 Gew.-% Füllstoffe, 1 bis 10 Gew.-% Thixotropiermittel und 2 bis 10 Gew.-% hitzeaktivierbare Härter auf. Als Zähigkeitsmodifikatoren eignen sich reaktive Flüssigkautschuke auf Basis von Nitrilkautschuk oder Derivate von Polyetherpolyol-Polyurethanen, Core-Shell Polymere und ähnliche dem Fachmann bekannte Systeme.

Ebenfalls geeignete expandierbare Materialien sind Treibmittel enthaltende einkomponentige Polyurethanzusammensetzungen, aufgebaut aus kristallinen, OH-Gruppen aufweisenden Polyestern im Gemisch mit weiteren Polyolen, vorzugsweise Polyetherpolyolen, und Polyisocyanaten mit blockierten Isocyanatgruppen. Der Schmelzpunkt des kristallinen Polyesters sollte ≥ 50 °C sein. Die Isocyanatgruppen des Polyisocyanats können beispielsweise mit Nucleophilen wie Caprolactam, Phenolen oder Benzoxalonen blockiert sein. Weiterhin eignen sich blockierte Polysocyanate wie sie beispielsweise in der Pulverlacktechnologie zum Einsatz kommen und beispielsweise unter den Handelsnamen Vestagon^{®} BF 1350 und Vestagon^{®} BF 1540 kommerziell erhältlich sind von Degussa GmbH, Deutschland. Als Isocyanate sind ebenfalls so genannte verkapselte oder oberflächendeaktivierte Polyisocyanate, welche dem Fachmann bekannt und beispielsweise beschrieben sind in EP 0 204 970.

Weiterhin eignen sich als expandierbare Materialien Treibmittel enthaltende zweikomponentige Epoxid/Polyurethan-Zusammensetzungen, wie sie beispielsweise beschrieben sind in WO 2005/080524 A1.

Weiterhin eignen sich als expandierbare Materialien Treibmittel enthaltende Ethylen-Vinyl-Acetat-Zusammensetzungen.

Ebenfalls geeignete expandierbare Materialien werden beispielsweise unter dem Handelsnamen SikaBaffle^{®} 240, SikaBaffle^{®} 250 oder SikaBaffle^{®} 255 von der Sika Corp., USA, vertrieben und sind in den Patenten US 5,266,133 und US 5,373,027 beschrieben. Solche expandierbaren Materialien sind für die vorliegende Erfindung besonders bevorzugt.

Als expandierbare Materialien mit Verstärkungseigenschaften sind beispiels-weise diejenigen bevorzugt, welche unter dem Handelsnamen SikaReinforcer^{®} 941 von der Sika Corp., USA, vertrieben werden. Diese sind beschrieben in US 6,387,470.

In einer beispielhaften Ausführungsform hat das expandierbare Material eine Expansionsrate von 800% bis 4000%, bevorzugt von 1000% bis 3000%, besonders bevorzugt von 1500% bis 3000%.

Expandierbare Materialien mit solchen Expansionsraten bieten den Vorteil, dass dadurch eine zuverlässige Abdichtung bzw. Dämmung des Strukturelementes gegen Flüssigkeiten und Schall erreicht werden kann.

In einer beispielhaften Ausführungsform ist das expandierbare Material als temperaturinduziertes Material ausgebildet.

Dies hat den Vorteil, dass dadurch der Ofen zur Einbrennung der Tauchlackierungsflüssigkeit benutzt werden kann, um das expandierbare Material zu expandieren und um dadurch den Hohlraum zu dämmen. Somit ist kein zusätzlicher Arbeitsschritt notwendig.

Der Träger kann aus beliebigen Materialien bestehen. Bevorzugte Materialien sind Kunststoffe, insbesondere Polyurethane, Polyamide, Polyester und Polyolefine, bevorzugt hochtemperaturbeständige Polymere wie Poly(phenylenether), Polysulfone oder Polyethersulfone, welche insbesondere auch geschäumt sind; Metalle, insbesondere Aluminium und Stahl; oder gewachsene organische Materialien, insbesondere Holz- oder andere (gepresste) Faserwerkstoffe oder glasartige oder keramische Materialien; speziell auch geschäumte Materialien dieser Art; oder beliebige Kombinationen dieser Materialien. Besonders bevorzugt wird Polyamid, insbesondere Polyamid 6, Polyamid 6,6, Polyamid 11, Polyamid 12 oder ein Gemisch davon verwendet.

Weiterhin kann der Träger einen beliebigen Aufbau und eine beliebige Struktur aufweisen. Es kann beispielsweise massiv, hohl, oder geschäumt sein oder eine gitterartige Struktur aufweisen. Die Oberfläche des Trägers kann typischerweise glatt, rau oder strukturiert sein.

Bei Dämmelementen, bei welchen sich das expandierbare Material auf einem Träger befindet, unterscheidet sich das Herstellungsverfahren dementsprechend, ob der Träger aus einem durch Spritzguss verarbeitbaren Material besteht oder nicht. Ist dies der Fall, wird üblicherweise ein Zweikomponenten-Spritzgussverfahren eingesetzt. Dabei wird zuerst eine erste Komponente, in diesem Fall der Träger, gespritzt. Nach Erstarren dieser ersten Komponente wird die Kavität im Werkzeug vergrössert, bzw. angepasst, oder der hergestellte Spritzling wird in ein neues Werkzeug gelegt, und eine zweite Komponente, in diesem Fall das expandierbare Material, wird mit einem zweiten Spritzaggregat an die erste Komponente angespritzt.

Besteht der Träger aus einem Material, welches sich nicht durch das Spritzgussverfahren herstellen lässt, also beispielsweise aus einem Metall, wird der Träger in ein entsprechendes Werkzeug gelegt und das expandierbare Material wird an den Träger angespritzt. Selbstverständlich besteht auch die Möglichkeit das expandierbare Material durch spezielle Befestigungsmittel oder -verfahren an dem Träger zu befestigen.

Weiterhin können Träger auch durch andere Verfahren hergestellt werden, beispielsweise durch Extrusion.

In einer beispielhaften Ausführungsform werden Träger und expandierbares Material in in einem Koextrusionsverfahren in einem Schritt hergestellt. Zur Herstellung eines Grundelementes oder eines Zusatzelementes kann das Koextrudat abgelängt werden.

Die eingangs gestellte Ausgabe wird zudem gelöst durch ein System in einem Kraftfahrzeug, das System umfassend: ein Strukturelement, welches einen Hohlraum hat; und ein Dämmelement gemäss obiger Beschreibung; wobei das Dämmelement im Hohlraum des Strukturelementes angeordnet ist.

In einer beispielhaften Ausführungsform ist das Strukturelement ein Abschnitt einer Säule oder eines Trägers oder einer Verstrebung einer Karosserie eines Kraftfahrzeugs.

Die eingangs gestellte Aufgabe wird zudem gelöst durch ein Verfahren zur Dämmung eines Strukturelementes in einem Kraftfahrzeug, das Verfahren umfassend die Schritte: Bereitstellen eines Strukturelementes mit einem Hohlraum; Koppeln eines Grundelementes mit einem Zusatzelement zur Bildung eines Dämmelementes, wobei das Grundelement expandierbares Material umfasst und wobei das Zusatzelement expandierbares Material umfasst; Anordnen des Dämmelementes im Hohlraum des Strukturelementes; und Expandieren des expandierbaren Materials, wodurch ein Querschnitt des Strukturelementes vom Dämmelement mit dem expandierten Material im Wesentlichen verschlossen wird.

In einer beispielhaften Ausführungsform wird beim Anordnen des Dämmelementes im Hohlraum des Strukturelementes ein Fixierungselement des Dämmelementes in einer Öffnung des Strukturelementes eingerastet.

In einer beispielhaften Ausführungsform wird beim Expandieren des expandierbaren Materials das Dämmelement einer erhöhten Temperatur ausgesetzt.

In einer beispielhaften Weiterbildung wird das Dämmelement dabei auf zumindest 120°C erwärmt.

In einer beispielhaften Ausführungsform wird das Koppeln des Grundelementes mit dem Zusatzelement ausgeführt, bevor das Dämmelement im Hohlraum des Strukturelementes angeordnet wird.

In einer beispielhaften Ausführungsform wird das Verfahren mit einem oben beschriebenen Dämmelement durchgeführt.

Einzelheiten und Vorteile der Erfindung werden im Folgenden anhand von Ausführungsbeispielen und mit Bezug auf schematische Zeichnungen beschrieben. Es zeigen:
- Fig. 1: eine beispielhafte Darstellung einer Karosserie gemäss Stand der Technik;
- Fig. 2a bis 2c: eine schematische Darstellung eines beispielhaften Dämmelementes, welches in einem Strukturelement angeordnet und expandiert wird;
- Fig. 3a bis 3f: schematische Darstellungen von beispielhaften Grundelementen, wobei Fig. 3a, 3b, 3e ein nicht beanspruchtes Dämmelement zeigt;
- Fig. 4a bis 4e: schematische Darstellungen von beispielhaften Zusatzelementen, wobei Fig. 4a, 4b, 4d, 4e ein nicht beanspruchtes Dämmelement zeigt; und
- Fig. 5a bis 5c: schematische Darstellungen von beispielhaften Dämmelementen, wobei Fig.5b ein nicht beanspruchtes Dämmelement zeigt.

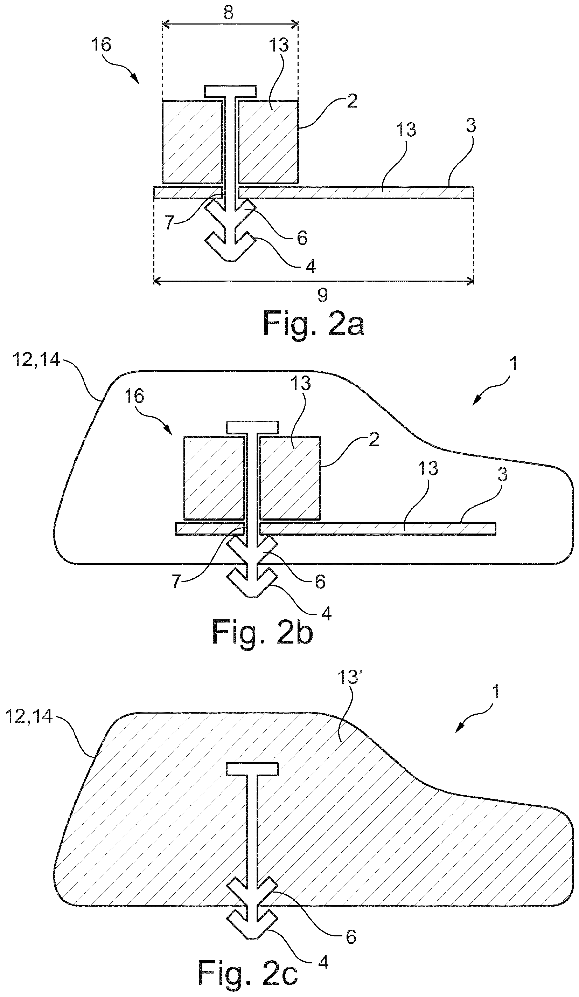

In den Fig. 2a bis 2c ist beispielhaft dargestellt, wie ein Dämmelement 16 in einem Strukturelement 12, 14 angeordnet werden kann, und wie durch eine Expansion des expandierbaren Materials 13 der Hohlraum des Strukturelementes 12, 14 mit dem expandierten Material 13' ausgefüllt bzw. verschlossen werden kann.

In Fig. 2a ist zunächst lediglich das Dämmelement 16 dargestellt. Das Dämmelement 16 umfasst ein Grundelement 2, ein Zusatzelement 3 und ein Fixierungselement 4. Das Grundelement umfasst ein erstes Kopplungselement 6, welches in diesem Ausführungsbeispiel als Teil eines Doppelclips ausgebildet ist, und das Zusatzelement 3 umfasst ein zweites Kopplungselement 7, welches in diesem Ausführungsbeispiel als Öffnung im expandierbaren Material 13 ausgebildet ist.

In dem Ausführungsbeispiel sind sowohl Grundelement 2 als auch Zusatzelement 3 ohne Träger ausgestaltet.

In diesem Ausführungsbeispiel wird zur Verbindung des Grundelementes 2 mit dem Zusatzelement 3 ein erstes Kopplungselement 6 in der Form eines Clips mit einem Anker verwendet. Indem dieser Clip 6 mit Anker durch eine Öffnung im expandierbaren Material 13 des Grundelementes 2 und auch durch eine Öffnung im expandierbaren Material 13 im Zusatzelement 3 hindurchgeführt wird, werden Grundelement 2 und Zusatzelement 3 miteinander verbunden.

Wie aus Fig. 2a ersichtlich, hat das Grundelement 2 eine Länge 8, und das Zusatzelement 3 hat eine Länge 9. In diesem Ausführungsbeispiel ist die Länge 9 des Zusatzelementes 3 mehr als doppelt so gross wie die Länge 8 des Grundelementes 2.

In Fig. 2b ist ersichtlich, wie dieses Dämmelement 16 im Strukturelement 12, 14 fixiert werden kann. Dabei wird das Fixierungselement 4 mit dem Strukturelement 12, 14 verbunden. In diesem Ausführungsbeispiel ist das Fixierungselement 4 als Bestandteil eines Doppelclips zusammen mit dem ersten Kopplungselement 6 ausgebildet. Zur Verbindung des Dämmelementes 16 mit dem Strukturelement 12, 14 wird der Clip des Fixierungselementes 4 durch eine Öffnung im Strukturelement 12, 14 hindurchgeführt, so dass das Dämmelement 16 im Strukturelement 12, 14 eingerastet ist.

In Fig. 2b ist das Dämmelement 16 vor einer Expansion des expandierbaren Materials 13 sowohl des Grundelementes 2 als auch des Zusatzelementes 3 dargestellt.

In Fig. 2c ist sodann eine Situation nach einer Expansion des expandierbaren Materials 13 dargestellt. Dabei verschliesst bzw. füllt das expandierte Material 13' den gesamten Hohlraum des Strukturelementes 12, 14. In dieser Situation sind sowohl das expandierte Material 13' des Grundelementes 2 als auch das expandierte Material 13' des Zusatzelementes 3 in einem expandierten Zustand.

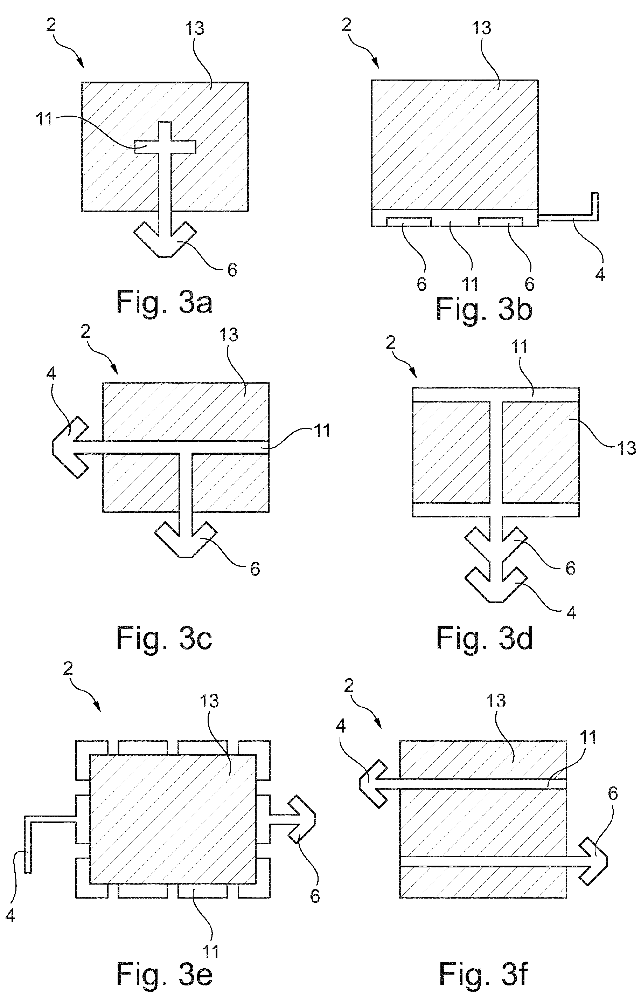

In den Fig. 3a bis 3f sind verschiedene Ausführungsbeispiele von Grundelementen 2 dargestellt. In diesen Ausführungsbeispielen hat das Grundelement 2 neben dem expandierbaren Material 13 jeweils einen Träger 11.

In Fig. 3a ist der Träger 11 mit einem kreuzartigen Querschnitt ausgebildet, welcher im expandierbaren Material 13 verankert ist. An diesem kreuzartigen Träger 11 ist das erste Kopplungselement 6 zur Verbindung mit dem Zusatzelement (in dieser Figur nicht dargestellt) abgebildet.

In Fig. 3b ist das Grundelement 2 ebenfalls mit einem Träger 11 und mit darauf angeordnetem expandierbaren Material 13 ausgebildet. In diesem Ausführungsbeispiel hat das Grundelement 2 zwei erste Kopplungselemente 6, welche beide als magnetische Materialien im Träger 11 integriert sind. Zudem ist am Träger 11 ein Fixierungselement 4 angeordnet, welches in diesem Ausführungsbeispiel als Schweisslasche ausgestaltet ist.

In Fig. 3c ist ein weiteres Ausführungsbeispiel eines Grundelementes 2 dargestellt. In diesem Ausführungsbeispiel sind am Träger 11 sowohl das erste Kopplungselement 6 in der Form eines Clips angeformt als auch das Fixierungselement 4, welches ebenfalls in der Form eines Clips ausgestaltet ist.

In Fig. 3d ist ein weiteres beispielhaftes Grundelement 2 dargestellt. In diesem Ausführungsbeispiel hat der Träger 11 des Grundelementes 2 eine erste Platte und eine zweite Platte. Das expandierbare Material 13 ist dabei zwischen diesen Platten des Trägers 11 angeordnet. Weiterhin sind das erste Kopplungselement 6 und das Fixierungselement 4 in der Form eines Doppelclips am Träger 11 des Grundelementes 2 angeformt.

In Fig. 3e ist ein weiteres beispielhaftes Grundelement 2 dargestellt. In diesem Ausführungsbeispiel ist das expandierbare Material 13 im Wesentlichen vom Träger 11 umfasst. Dabei hat der Träger 11 Öffnungen, durch welche das expandierbare Material 13 bei einer Expansion hindurch expandieren kann. Zudem sind am Träger 11 sowohl das Fixierungselement 4 in der Form einer Schweisslasche als auch das erste Kopplungselement 6 in der Form eines Clips angeordnet.

In Fig. 3f ist ein weiteres beispielhaftes Grundelement 2 dargestellt. In diesem Ausführungsbeispiel hat das Grundelement 2 wiederum ein expandierbares Material 13 und einen Träger 11. Der Träger 11 umfasst in diesem Ausführungsbeispiel eine erste Platte und eine zweite Platte. Dabei ist an der ersten Platte das Fixierungselement 4 angeordnet, und an der zweiten Platte des Trägers 11 ist das erste Kopplungselement 6 angeordnet.

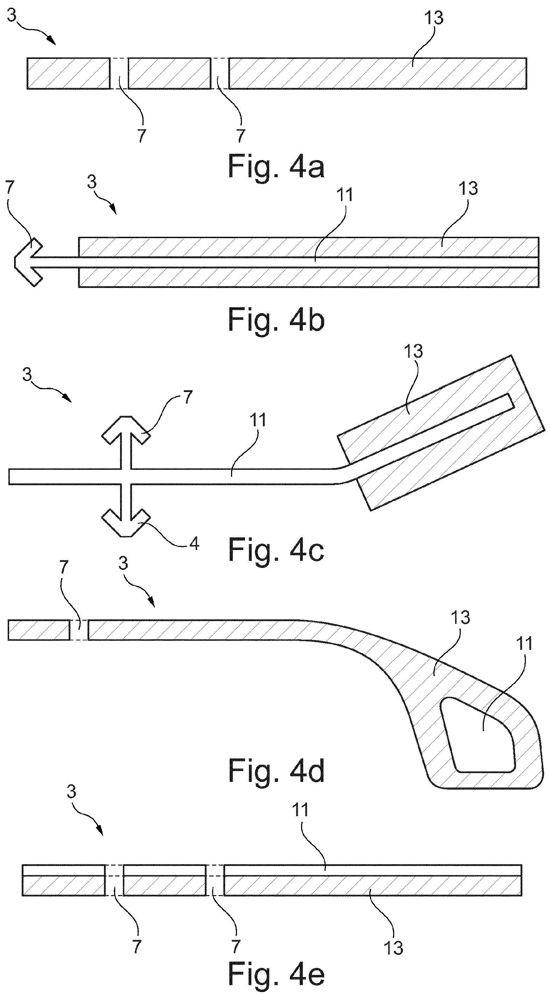

In den Fig. 4a bis 4e sind verschiedene Ausführungsbeispiele von Zusatzelementen 3 dargestellt.

In Fig. 4a ist ein erstes beispielhaftes Zusatzelement 3 dargestellt. Dieses Zusatzelement 3 umfasst ein expandierbares Material 13, jedoch keinen Träger. Die zweiten Kopplungselemente 7 sind in diesem Ausführungsbeispiel als Öffnungen im expandierbaren Material 13 ausgestaltet.

In Fig. 4b ist ein zweites beispielhaftes Zusatzelement 3 dargestellt. Im Unterschied zum Zusatzelement 3 in Fig. 4a hat dieses Zusatzelement 3 neben dem expandierbaren Material 13 einen Träger 11. An diesem Träger 11 ist das zweite Kopplungselement 7, welches als Clip ausgestaltet ist, angeformt. Auf beiden Seiten des Trägers 11 ist schichtartig das expandierbare Material 13 angeordnet.

In Fig. 4c ist ein drittes beispielhaftes Ausführungsbeispiel eines Zusatzelementes 3 dargestellt. Dieses Zusatzelement 3 hat einen Träger 11, an welchem das zweite Kopplungselement 7 und auch das Fixierungselement 4 angeordnet sind. Das expandierbare Material 13 ist an einem gebogenen Ende des Trägers 11 angeordnet, und umschliesst den Träger 11 an diesem gebogenen Ende vollständig.

In Fig. 4d ist ein viertes Ausführungsbeispiel eines Zusatzelementes 3 dargestellt. In diesem Ausführungsbeispiel umfasst das Zusatzelement 3 neben dem expandierbaren Material 13 einen Träger 11, welcher vollständig vom expandierbaren Material 13 umschlossen ist. Das zweite Kopplungselement 7 ist in diesem Ausführungsbeispiel als Öffnung im expandierbaren Material 13 ausgebildet.

In Fig. 4e ist ein fünftes Ausführungsbeispiel eines Zusatzelementes 3 dargestellt. In diesem Ausführungsbeispiel sind ein Träger 11 und das expandierbare Material 13 schichtartig nebeneinander angeordnet. Die zweiten Kopplungselemente 7 sind als Öffnungen ausgestaltet, welche sowohl durch den Träger 11 als auch durch das expandierbare Material 13 hindurchreichen. Ein solches Zusatzelement 3 kann beispielsweise durch ein Koextrusionsverfahren hergestellt werden.

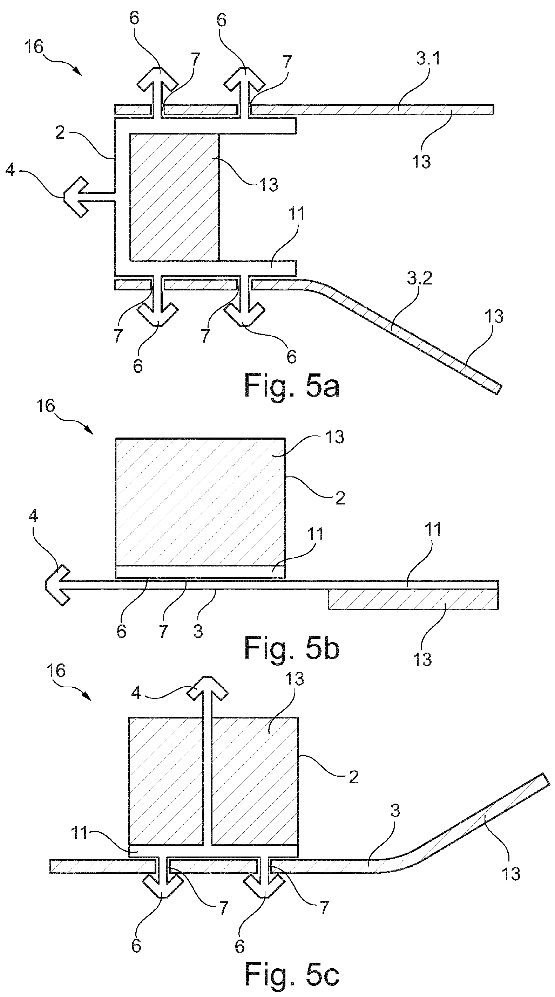

In den Fig. 5a bis 5c sind verschiedene beispielhafte Dämmelemente 16 dargestellt.

In Fig. 5a ist ein Dämmelement 16 dargestellt, welches neben dem Grundelement 2 und dem Fixierungselement 4 ein erstes Zusatzelement 3.1 und ein zweites Zusatzelement 3.2 umfasst. Die Zusatzelemente 3.1, 3.2 sind in diesem Ausführungsbeispiel als längliche expandierbare Materialien 13 ausgebildet, jeweils ohne einen Träger. Erste Kopplungselemente 6 des Grundelementes 2 sind als Clips ausgestaltet, welche in den zweiten Kopplungselementen 7 der Zusatzelemente 3.1, 3.2, welche als Öffnungen ausgestaltet sind, eingerastet sind.

In Fig. 5b ist ein weiteres beispielhaftes Dämmelement 16 dargestellt. In diesem Dämmelement hat sowohl das Grundelement 2 als auch das Zusatzelement 3 jeweils einen Träger 11 neben dem expandierbaren Material 13. In diesem Ausführungsbeispiel ist das Fixierungselement 4 am Träger 11 des Zusatzelementes 3 angeformt. Die Kopplungselemente 6, 7 sind in diesem Ausführungsbeispiel mit zumindest einer Klebstoffschicht ausgestaltet, welche die Träger 11 des Grundelementes 2 und des Zusatzelementes 3 miteinander verklebt.

In Fig. 5c ist ein weiteres beispielhaftes Dämmelement 16 dargestellt. In diesem Ausführungsbeispiel hat das Grundelement 2 einen Träger 11, das Zusatzelement 3 ist jedoch ohne Träger ausgebildet. Am Träger 11 des Grundelementes 2 ist das Fixierungselement 4 in der Form eines Clips angeformt. Zudem sind am Träger 11 des Grundelementes 2 zwei erste Kopplungselemente 6 in der Form von Clips ausgestaltet, welche in den zweiten Kopplungselementen 7, welche als Öffnungen im expandierbaren Material 13 des Zusatzelementes 3 ausgebildet sind, eingerastet sind.

### Bezugszeichenliste

- 1: System
- 2: Grundelement
- 3: Zusatzelement
- 3.1: erstes Zusatzelement
- 3.2: zweites Zusatzelement
- 4: Fixierungselement
- 6: erstes Kopplungselement
- 7: zweites Kopplungselement
- 8: Länge des Grundelementes
- 9: Länge des Zusatzelementes
- 10: Karosserie
- 11: Träger
- 12: Strukturelement
- 13: expandierbares Material
- 13': expandiertes Material
- 14: Strukturelement
- 16: Dämmelement

## Patentansprüche

1. Dämmelement (16) zur Dämmung eines Strukturelementes (12, 14) in einem Kraftfahrzeug, das Dämmelement (16) umfassend:
ein Grundelement (2) mit einem ersten Kopplungselement (6), wobei das Grundelement (2) expandierbares Material (13) umfasst;
ein Zusatzelement (3) mit einem zweiten Kopplungselement (7), wobei das Zusatzelement (3) expandierbares Material (13) umfasst; und
ein Fixierungselement (4) zur Fixierung des Dämmelementes (16) im Strukturelement (12, 14);
wobei das Grundelement (2) und das Zusatzelement (3) durch die Kopplungselemente (6, 7) miteinander verbunden sind;
**dadurch gekennzeichnet, dass** das Fixierungselement (4) zusammen mit dem ersten Kopplungselement (6) oder dem zweiten Kopplungselement (7) als doppelter Clip ausgebildet ist.

2. Dämmelement (16) nach Anspruch 1, wobei das erste Kopplungselement (6) und das zweite Kopplungselement (7) als Clip und Öffnung ausgebildet sind, so dass die Kopplungselemente (6, 7) ineinander einrastbar sind.

3. Dämmelement (16) nach einem der vorhergehenden Ansprüche, wobei das Grundelement (2) und das Zusatzelement (3) jeweils zwei oder mehrere Kopplungselemente (6, 7) haben, so dass Grundelement (2) und Zusatzelement (3) an zwei oder mehreren Orten miteinander verbunden sind.

4. Dämmelement (16) nach einem der vorhergehenden Ansprüche, wobei das Grundelement (2) einen Träger (11) hat, auf welchem das expandierbare Material (13) angeordnet ist.

5. Dämmelement (16) nach Anspruch 4, wobei der Träger (11) eine erste Platte hat, und wobei das expandierbare Material (13) auf einer Seite der Platte oder auf beiden Seiten der Platte angeordnet ist.

6. Dämmelement (16) nach Anspruch 5, wobei der Träger (11) eine zweite Platte hat, und wobei das expandierbare Material (13) zumindest zwischen der ersten Platte und der zweiten Platte angeordnet ist.

7. Dämmelement (16) nach einem der vorhergehenden Ansprüche, wobei das Grundelement (2) durch ein Spritzgussverfahren hergestellt ist.

8. Dämmelement (16) nach einem der vorhergehenden Ansprüche, wobei das Zusatzelement (3) eine Länge (9) hat, welche zumindest doppelt so gross ist wie eine Länge (8) des Grundelementes (2).

9. Dämmelement (16) nach einem der vorhergehenden Ansprüche, wobei das Zusatzelement (3) durch ein Extrusionsverfahren hergestellt ist.

10. Dämmelement (16) nach einem der vorhergehenden Ansprüche, wobei das Zusatzelement (3) einen Träger (11) hat.

11. Dämmelement (16) nach einem der vorhergehenden Ansprüche, wobei das Fixierungselement (4) als separates Element oder einstückig mit dem Träger (11) des Grundelementes (2) oder einstückig mit dem Träger des Zusatzelementes (3) ausgebildet ist.

12. System (1) in einem Kraftfahrzeug, das System (1) umfassend:
ein Strukturelement (12, 14), welches einen Hohlraum hat; und
ein Dämmelement (16) nach einem der Ansprüche 1 bis 11;
wobei das Dämmelement (16) im Hohlraum des Strukturelementes (12, 14) angeordnet ist.

13. Verfahren zur Dämmung eines Strukturelementes (12, 14) in einem Kraftfahrzeug mit einem Dämmelement (16) nach einem der Ansprüche 1 bis 11, das Verfahren umfassend die Schritte:
Bereitstellen eines Strukturelementes (12, 14) mit einem Hohlraum;
Koppeln des Grundelementes (2) mit dem Zusatzelement (3) zur Bildung des Dämmelementes (16) nach einem der Ansprüche 1 bis 11, wobei das Grundelement (2) expandierbares Material (13) umfasst und wobei das Zusatzelement (3) expandierbares Material (13) umfasst;
Anordnen des Dämmelementes (16) im Hohlraum des Strukturelementes (12, 14);
Expandieren des expandierbaren Materials (13), wodurch ein Querschnitt des Strukturelementes (12, 14) vom Dämmelement (16) mit dem expandierten Material (13') im Wesentlichen verschlossen wird;
**dadurch gekennzeichnet, dass** das Fixierungselement (4) zusammen mit dem ersten Kopplungselement (6) oder dem zweiten Kopplungselement (7) als doppelter Clip ausgebildet ist.

## Claims

1. Insulating element (16) for insulating a structural element (12, 14) in a motor vehicle, the insulating element (16) comprising:
a base element (2) with a first coupling element (6), wherein the base element (2) comprises expandable material (13);
an additional element (3) with a second coupling element (7), wherein the additional element (3) comprises expandable material (13); and
a fixing element (4) for fixing the insulating element (16) in the structural element (12, 14);
wherein the base element (2) and the additional element (3) are connected to one another by the coupling elements (6, 7);
**characterized in that** the fixing element (4) together with the first coupling element (6) or with the second coupling element (7) is designed as a double clip.

2. Insulating element (16) according to Claim 1, wherein the first coupling element (6) and the second coupling element (7) are in the form of a clip and an opening, with the result that the coupling elements (6, 7) can be latched into one another.

3. Insulating element (16) according to either of the preceding claims, wherein the base element (2) and the additional element (3) each have two or more coupling elements (6, 7), with the result that the base element (2) and the additional element (3) are connected to one another at two or more locations.

4. Insulating element (16) according to one of the preceding claims, wherein the base element (2) has a carrier (11) on which the expandable material (13) is arranged.

5. Insulating element (16) according to Claim 4, wherein the carrier (11) has a first plate, and wherein the expandable material (13) is arranged on one side of the plate or on both sides of the plate.

6. Insulating element (16) according to Claim 5, wherein the carrier (11) has a second plate, and wherein the expandable material (13) is arranged at least between the first plate and the second plate.

7. Insulating element (16) according to one of the preceding claims, wherein the base element (2) is produced by an injection moulding process.

8. Insulating element (16) according to one of the preceding claims, wherein the additional element (3) has a length (9) which is at least twice a length (8) of the base element (2).

9. Insulating element (16) according to one of the preceding claims, wherein the additional element (3) is produced by an extrusion process.

10. Insulating element (16) according to one of the preceding claims, wherein the additional element (3) has a carrier (11).

11. Insulating element (16) according to one of the preceding claims, wherein the fixing element (4) is in the form of a separate element or is formed in one piece with the carrier (11) of the base element (2) or in one piece with the carrier of the additional element (3).

12. System (1) in a motor vehicle, the system (1) comprising:
a structural element (12, 14) which has a cavity; and
an insulating element (16) according to one of Claims 1 to 11;
wherein the insulating element (16) is arranged in the cavity of the structural element (12, 14).

13. Method for insulating a structural element (12, 14) in a motor vehicle by way of an insulating element (16) according to one of Claims 1 to 11, the method comprising the steps of:
providing a structural element (12, 14) having a cavity;
coupling the base element (2) to the additional element (3) in order to form the insulating element (16) according to one of Claims 1 to 11, wherein the base element (2) comprises expandable material (13) and wherein the additional element (3) comprises expandable material (13);
arranging the insulating element (16) in the cavity of the structural element (12, 14);
expanding the expandable material (13), as a result of which a cross section of the structural element (12, 14) is substantially closed by the insulating element (16) by way of the expanded material (13');
**characterized in that** the fixing element (4) together with the first coupling element (6) or with the second coupling element (7) is in the form of a double clip.

## Revendications

1. Élément isolant (16) pour isoler un élément structurel (12, 14) dans un véhicule à moteur, l'élément isolant (16) comprenant :
un élément de base (2) avec un premier élément de couplage (6), l'élément de base (2) comprenant un matériau expansible (13) ;
un élément supplémentaire (3) avec un deuxième élément de couplage (7), l'élément supplémentaire (3) comprenant un matériau expansible (13) ; et
un élément de fixation (4) pour fixer l'élément isolant (16) dans l'élément structurel (12, 14) ;
l'élément de base (2) et l'élément supplémentaire (3) étant reliés l'un à l'autre par les éléments de couplage (6, 7) ;
**caractérisé en ce que** l'élément de fixation (4) est formé conjointement avec le premier élément de couplage (6) ou le deuxième élément de couplage (7) en tant qu'un double clip.

2. Elément isolant (16) selon la revendication 1, le premier élément de couplage (6) et le deuxième élément de couplage (7) étant formés en tant qu'un clip et une ouverture de telle sorte que les éléments de couplage (6, 7) peuvent être enclenchés l'un dans l'autre.

3. Elément isolant (16) selon l'une des revendications précédentes, l'élément de base (2) et l'élément supplémentaire (3) ayant respectivement deux ou plusieurs éléments de couplage (6, 7) de telle sorte que l'élément de base (2) et l'élément supplémentaire (3) sont reliés l'un à l'autre sur deux ou plusieurs emplacements.

4. Elément isolant (16) selon l'une des revendications précédentes, l'élément de base (2) ayant un support (11), sur lequel le matériau expansible (13) est disposé.

5. Elément isolant (16) selon la revendication 4, le support (11) ayant une première plaque et le matériau expansible (13) étant disposé sur un côté de la plaque ou sur les deux côtés de la plaque.

6. Elément isolant (16) selon la revendication 5, le support (11) ayant une deuxième plaque et le matériau expansible (13) étant disposé au moins entre la première plaque et la deuxième plaque.

7. Elément isolant (16) selon l'une des revendications précédentes, l'élément de base (2) étant fabriqué par un procédé de moulage par injection.

8. Elément isolant (16) selon l'une des revendications précédentes, l'élément supplémentaire (3) ayant une longueur (9), laquelle est au moins deux fois plus grande qu'une longueur (8) de l'élément de base (2).

9. Elément isolant (16) selon l'une des revendications précédentes, l'élément supplémentaire (3) étant fabriqué par un procédé d'extrusion.

10. Elément isolant (16) selon l'une des revendications précédentes, l'élément supplémentaire (3) ayant un support (11).

11. Elément isolant (16) selon l'une des revendications précédentes, l'élément de fixation (4) étant formé en tant qu'un élément séparé ou d'un seul tenant avec le support (11) de l'élément de base (2) ou d'un seul tenant avec le support de l'élément supplémentaire (3).

12. Système (1) dans un véhicule à moteur, le système (1) comprenant :
un élément structurel (12, 14), lequel a un espace creux ; et
un élément isolant (16) selon l'une des revendications 1 à 11 ;
l'élément isolant (16) étant disposé dans l'espace creux de l'élément structurel (12, 14).

13. Procédé pour isoler un élément structurel (12, 14) dans un véhicule à moteur avec un élément isolant (16) selon l'une des revendications 1 à 11, le procédé comprenant les étapes :
de fourniture d'un élément structurel (12, 14) avec un espace creux ;
de couplage de l'élément de base (2) à l'élément supplémentaire (3) pour former l'élément isolant (16) selon l'une des revendications 1 à 11, l'élément de base (2) comprenant un matériau expansible (13) et l'élément supplémentaire (3) comprenant un matériau expansible (13) ;
de disposition de l'élément isolant (16) dans l'espace creux de l'élément structurel (12, 14) ;
d'expansion du matériau expansible (13), ce qui permet de fermer sensiblement une section transversale de l'élément structurel (12, 14) par l'élément isolant (16) avec le matériau expansé (13') ;
**caractérisé en ce que** l'élément de fixation (4) est formé conjointement avec le premier élément de couplage (6) ou le deuxième élément de couplage (7) en tant qu'un double clip.
